# FASCICULE DE BREVET EUROPEEN

(11) **EP 2 795 947 B1**
(45) Date de publication et mention de la délivrance du brevet: **11.07.2018**
(21) Numéro de dépôt: 12808417.5
(22) Date de dépôt: 24.12.2012
(51) Int. Cl.: H04W 12/06, H04N 1/00, H04N 1/327, G09C 5/00, H04N 1/32

(54) **MÉTHODE D'APPAIRAGE D'ÉQUIPEMENTS ÉLECTRONIQUES**
VERFAHREN ZUR PAARUNG ELEKTRONISCHER EINRICHTUNGEN
METHOD FOR PAIRING ELECTRONIC EQUIPMENTS

(30) Priorité: 23.12.2011 FR 1162408
(43) Date de publication de la demande: 29.10.2014
(73) Titulaire: Ingenico Group, 75015 Paris (FR)
(72) Inventeur: MARSAUD, Thierry, F-33400 Talence (FR); MENARDAIS, Michael, F-33160 Saint Menard en Jalles (FR)
(74) Mandataire: Vidon Brevets & Stratégie
(86) Numéro de dépôt international: PCT/EP2012/076885
(87) Numéro de publication internationale: WO 2013/093120

(56) Documents cités:
- US-A1- 2010 012 715
- US-A1- 2011 081 860
- US-A1- 2011 246 909

## Description

### 1. Domaine de l'invention

L'invention se rapporte au domaine de l'authentification. L'invention se rapporte plus particulièrement à l'authentification matérielle de dispositifs entre eux.

### 2. État de la technique

Il est bien connu de l'état de la technique de nombreux protocoles qui permettent à deux dispositifs de s'authentifier préalablement à la transmission ou à l'échange d'informations confidentielles. Tel est par exemple le cas d'un terminal de communication sans fil qui souhaite s'authentifier sur un réseau local d'un utilisateur, par exemple un réseau sans fil wifi. Pour ce faire, préalablement à tout échange de donnée, le terminal doit s'authentifier sur le réseau de communication. Cette authentification passe généralement par une phase de saisie d'une clé, qui est par exemple une clé WEP (de l'anglais pour « Wired Equivalent Privacy », une clé WPA (« Wi-Fi Protected Access ») PSK (« pre-shared key ») ou autre. Un des problèmes avec ce type de clé est la longueur de celle-ci. Une clé WEP comprend 13 caractères, tandis qu'une clé WPA-PSK est normalement une phrase secrète qui peut être longue à saisir.

D'autres domaines nécessitent une authentification entre des dispositifs sans fils. Il en va ainsi par exemple des dispositifs qui communiquent par l'intermédiaire de la technologie Bluetooth®. Bluetooth est une technologie sans fil pour créer des réseaux personnels sans fils fonctionnant dans la bande de fréquence de 2.4 GHz ne nécessitant pas d'autorisation, avec une portée d'environ une dizaine de mètres. Les réseaux sont généralement composés de périphériques nomades comme les téléphones portables, les assistants personnels et les ordinateurs portables. Par défaut, une communication Bluetooth n'est pas authentifiée, et n'importe quel périphérique peut échanger des données avec n'importe quel autre périphérique.

Un périphérique Bluetooth (par exemple un téléphone portable) peut choisir de demander une authentification pour fournir un service particulier. L'authentification Bluetooth est généralement effectuée avec des *codes PIN.* Un code PIN Bluetooth est une chaîne ASCII d'une longueur maximum de 16 caractères. Par défaut, L'utilisateur doit entrer le même code PIN sur les deux périphériques. Une fois que l'utilisateur a entré le code PIN, les deux périphériques génèrent une *clé de liaison* (link key). Ensuite cette clé de liaison peut être enregistrée soit dans les périphériques eux-mêmes ou sur un moyen de stockage externe. Lors de l'échange suivant, les deux périphériques utiliseront la clé de liaison précédemment générée. Cette procédure est appelée *couplage.* Lorsque la clé de liaison est perdue par un des périphériques alors l'opération de couplage doit être répétée pour qu'une nouvelle clé puisse être générée.

Lorsque les données qui doivent être échangées entre les deux terminaux Bluetooth sont des données sensibles (comme des données bancaires par exemple), les échanges qui suivent la phase de couplage sont chiffrés, par exemple à l'aide de l'algorithme E0. E0 est l'algorithme de chiffrement à flot utilisé pour protéger la confidentialité des données échangées dans Bluetooth.

Le problème cependant est le même que pour la clé WEP ou la clé WPA : Il est nécessaire préalablement à tout échange chiffré, que l'utilisateur saisisse sur le terminal, un code PIN dont la longueur varie de 4 à 16 caractères, sachant que pour les applications les plus sécurisées, le code PIN à 16 caractères est préféré.

Que ce soit pour la technologie WiFi ou pour la technologie Bluetooth, la saisie d'un code PIN ou d'une clé d'une longueur excessive entraine au moins deux de problèmes :
- d'une part un risque d'erreur lors de la saisie qui est important. En effet, il est quasiment assuré que la saisie comporte au moins une erreur. Ceci est particulièrement vrai lorsque la saisie s'effectue en caractère masqué (les caractères saisis ne sont pas affichés, mais à la place c'est une suite de caractères étoile qui est affichée) ;
- d'autre part, la saisie étant manuelle, rien n'assure qu'une personne malintentionnée n'espionne pas la saisie dans le but de s'approprier le code PIN ou la clé pour un usage frauduleux.

Des solutions de sécurisation ont été proposées, principalement pour la mise en oeuvre d'une connexion Wi-Fi. Elles consistent en l'activation quasi simultanée des deux dispositifs à connecter ensemble. L'une de ces solutions est nommée « Wi-Fi Protected Setup (WPS) » et est un standard de réseau local sans fil simple et sécurisé. Cette solution ne règle cependant pas tous les problèmes, puisque l'une des variantes de WPS suppose la saisie d'un code PIN.

US2011/0081860 A1 et US2010/0012715 divulguent des méthodes proposant le scannage de codes-barres afin d'obtenir le code PIN de couplage Bluetooth.

En d'autres termes, il est nécessaire de fournir une solution de connexion qui soit à la fois simple et discrète afin d'une part d'éviter les erreurs de saisie et d'autre part d'assurer la confidentialité des données nécessaires à la connexion ou à l'appairage.

### 3. Résumé de l'invention

L'invention ne présente pas ces inconvénients de l'art antérieur.

L'invention est définie dans les revendications indépendantes 1, 2, 8 et 9. Des modes de réalisation particuliers sont définis dans les revendications dépendantes. L'invention se rapporte à une méthode d'appairage d'un premier équipement, dit équipement initiateur désirant transmettre et recevoir des données avec un deuxième équipement, dit équipement accepteur.

Selon l'invention ladite méthode comprend :
- une étape de génération d'un code d'appairage ;
- une épate de restitution, sous la forme d'un premier symbole, dudit code d'appairage par ledit équipement accepteur ;
- une étape d'acquisition dudit premier symbole par ledit équipement initiateur ;
- une étape de décodage dudit premier symbole acquis délivrant ledit code d'appairage.

Selon l'invention, le code d'appairage est aléatoire et volatile. Il n'est pas stocké et ne peut pas être récupéré ultérieurement.

Selon une caractéristique particulière ladite méthode d'appairage comprend en outre :
- une étape d'obtention, par ledit équipement accepteur, d'au moins une donnée utile ;
- une épate de restitution, sous la forme d'un deuxième symbole, de ladite au moins une donnée utile.

Selon une caractéristique particulière ladite méthode d'appairage comprend en outre :
- une étape d'acquisition dudit deuxième symbole par ledit équipement initiateur ;
- une étape de décodage dudit deuxième symbole délivrant lesdites données utiles.

Selon une caractéristique particulière, ledit premier symbole et ledit deuxième symbole forment un seul et même symbole.

Selon un mode de réalisation particulier un symbole appartient à un type de symbole et en ce que ledit type de symbole appartient au groupe comprenant :
- Un code barre à une dimension ;
- Un code barre à deux dimensions ;
- Une image tatouée ;
- Une séquence sonore modulée ;

Selon une caractéristique particulière, ledit équipement initiateur est un PDA et en ce que ledit équipement accepteur est un terminal de paiement.

Selon une caractéristique particulière, ladite étape de restitution dudit code d'appairage sou la forme d'un premier symbole comprend une étape d'impression dudit premier symbole sur une imprimante dudit équipement accepteur.

Selon un mode de réalisation particulier, ladite étape d'acquisition dudit premier symbole par ledit équipement initiateur comprend une étape d'acquisition d'une image représentative dudit premier symbole.

L'invention concerne également un équipement initiateur désirant transmettre et recevoir des données avec un équipement accepteur.

Selon l'invention un tel équipement comprend :
- des moyens d'acquisition d'un premier symbole représentatif d'un code d'appairage permettant l'appairage dudit équipement accepteur et dudit équipement initiateur, ledit premier symbole étant restitué par un équipement accepteur ;
- des moyens de décodage dudit premier symbole acquis délivrant ledit code d'appairage ;

L'invention concerne également un équipement accepteur désirant transmettre et recevoir des données avec un équipement initiateur. Selon l'invention un tel équipement comprend :
- Des moyens de génération d'un code d'appairage permettant l'appairage dudit équipement accepteur et dudit équipement initiateur ;
- une épate de restitution, sous la forme d'un premier symbole, dudit code d'appairage ;

L'invention vise aussi un support d'informations lisible par un processeur de données, et comportant des instructions d'un programme tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un mode de réalisation, l'invention est mise en oeuvre au moyen de composants logiciels et/ou matériels. Dans cette optique, le terme "module" peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonctions, selon ce qui est décrit ci-dessous pour le module concerné. Un tel composant logiciel est exécuté par un processeur de données d'une entité physique (terminal, serveur, etc) et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware) apte à mettre en oeuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré, une carte à puce, une carte à mémoire, une carte électronique pour l'exécution d'un micrologiciel (firmware), etc.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 décrit le principe général de l'invention ;
- la figure 2 décrit les étapes nécessaires à l'appairage d'un PDA avec un terminal de paiement ;
- la figure 3 symbolise un équipement accepteur selon l'invention ;
- la figure 4 symbolise un équipement initiateur selon l'invention.*

### 5. Description d'un mode de réalisation

### 5.1. Rappel du principe de l'invention

Comme préalablement explicité, l'invention offre une nouvelle méthode de saisie de code d'appairage (par exemple un code PIN) pour l'appairage de deux dispositifs. L'invention s'applique notamment à la technologie d'appairage Bluetooth, mais il est également possible de l'appliquer à d'autres protocoles qui comprennent une saisie, par l'utilisateur, d'un code PIN ou d'un mot de passe ou d'une « passphrase » (phrase secrète utilisée pour une meilleure sécurité qu'un simple mot de passe).

Dans un mode de réalisation particulier, qui sera décrit par la suite, la solution de l'invention met en oeuvre deux équipements Bluetooth, l'un qui initie le processus d'appairage et l'autre qui l'accepte.

Par la suite, il est fait respectivement référence à l'initiateur et à l'accepteur pour désigner respectivement ces équipements.

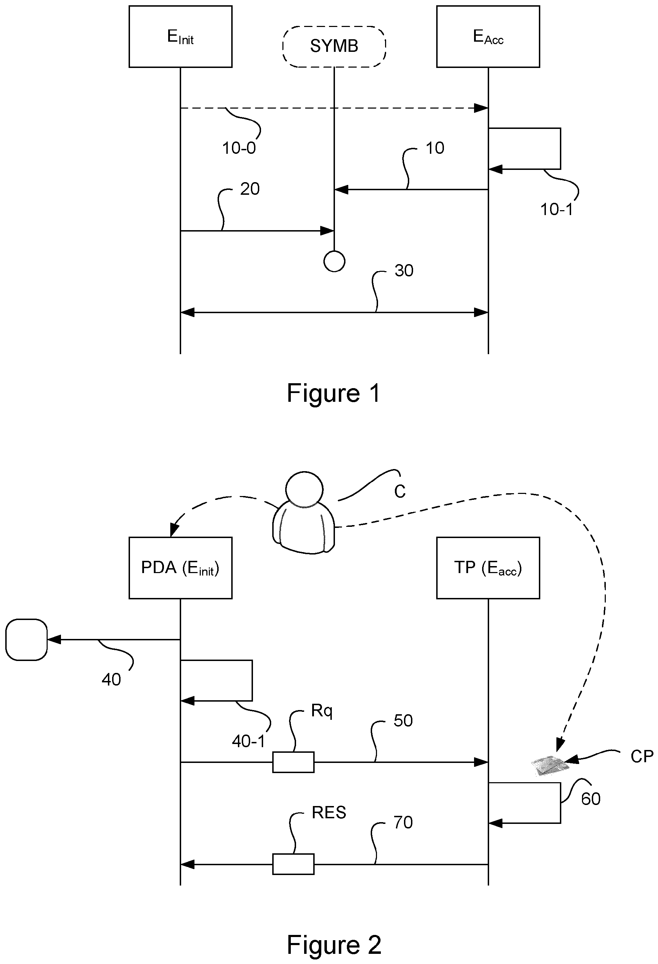

Le procédé de l'invention est décrit en relation avec la figure 1. Dans le cadre de l'invention, l'équipement initiateur E_{Init} dispose d'un capteur électronique d'image (comme par exemple : lecteur de code, lecteur code-barres, périphérique permettant la lecture et le décodage d'image tels que les appareils photo embarqués sur les Smartphones ou autres équipements électroniques), et l'équipement accepteur E_{Acc} dispose d'une imprimante ou d'un écran et doit être capable d'imprimer ou afficher les symboles (l'équipement accepteur dispose plus généralement d'un moyen de restitution visuel ou sonore).

Le terme de symbole utilisé ici s'entend comme tout type de représentation d'une donnée numérique ou alphanumérique sous forme d'un symbole graphique ou audio (exemple : code-barres en une, deux ou trois dimensions, pulsation sonores, etc.). Selon l'invention, le symbole comprend un ensemble de données pouvant être restituées par l'équipement acquéreur et acquises par l'équipement initiateur. Selon l'invention, le symbole n'est pas interprétable par un humain (il n'est pas directement lisible et compréhensible ou audible et compréhensible). Dans un mode de réalisation spécifique de l'invention, le symbole est incrusté dans une image selon une méthode watermarking (image tatouée). Dans ce mode de réalisation, l'équipement initiateur acquiert l'image et obtient la marque cachée dans l'image acquise. À partir de cette marque il recrée le symbole et le décode pour obtenir le code PIN. Il y a donc un double codage du code PIN. Ceci est avantageux à plusieurs points de vue. D'une part, le fait que le symbole soit caché dans une image tatouée empêche un fraudeur de percevoir que l'image affichée contient un code. D'autre part, pour obtenir la marque cachée, il est nécessaire de mettre en oeuvre une méthode de découverte (de décodage) du symbole, ce qui constitue en réalité un double codage et augmente la sécurité. Avantageusement, l'image utilisée pour insérée le symbole est par exemple le logo du magasin ou de la banque ou de l'entité qui utilise les terminaux. Ainsi, la découverte du fait que l'on émet un symbole est encore plus complexifiée. Dans le cas d'une séquence sonore, les avantages produits sont similaires. D'une part du fait que la séquence est produite à l'initiative du premier terminal et qu'un fraudeur ne sait donc pas quand elle sera produite. D'autre part, comme pour l'image tatouée, du fait que la séquence sonore représente à nouveau un codage du symbole et qu'il est donc nécessaire de réaliser un double décodage pour obtenir l'information. En troisième lieu, la séquence sonore modulée peut être émise sur des fréquences imperceptibles par un fraudeur de sorte qu'il est incapable de savoir quand le code est émis. En fonction des modes de réalisation, ma séquence sonore modulée pourra par exemple être une séquence DTMF. Ainsi, dans le cadre de l'invention, il y a plusieurs types de symboles utilisables. Comme cela sera présenté postérieurement, les différents types de symboles peuvent être utilisés conjointement ou successivement.

Selon l'invention, le processus d'appairage s'effectue globalement en deux étapes pour l'utilisateur :
- l'équipement accepteur E_{Acc}, restitue 10 (imprime ou affiche ou émet un son) les symboles SYMB du code PIN ; en complément, d'autres paramètres peuvent également être restitué (adresse de l'équipement accepteur par exemple, cet aspect est détaillé par la suite)
- l'équipement initiateur E_{Init} acquiert 20 (par lecture, scanne ou reconnaissance audio) le code PIN l'aide du lecteur de symboles. Lorsque d'autres paramètres sont utilisés (adresse de l'équipement accepteur par exemple, cette adresse est également acquise).

Il n'y a donc aucune saisie manuelle de l'utilisateur, ce qui simplifie le processus et évite les erreurs.

Le mécanisme d'appairage standard avec authentification est alors initié 30 et les deux équipements deviennent connectés en quelques secondes (dépendant de l'environnement radio).

Le code PIN est généré 10-1 de manière aléatoire sur l'équipement accepteur et est composé du maximum de caractère possible, ce qui assure un niveau de sécurité élevé sur la liaison entre les deux équipements. Dans le cas d'une application utilisant la technologie Bluetooth par exemple, le code PIN comprend 16 caractères.

De plus le code PIN est généré de manière asynchrone, antérieurement ou postérieurement à la décision 10-0 de l'appairage de l'équipement initiateur E_{Init}, avec l'équipement accepteur E_{Acc} et n'est donc pas stocké en mémoire non volatile dans l'équipement accepteur E_{Acc}. La décision 10-0 est prise par un utilisateur qui décide d'appairer les deux équipements. Le code PIN est aléatoire et volatile.

Lorsque deux équipements sont déjà appariés, on peut également établir un nouvel appairage avec un nouveau code PIN aléatoire, ce qui permet de modifier les clés de chiffrement de manière périodique et permet donc d'augmenter encore la sécurité de ce lien.

Comme explicité préalablement, il est également possible de fournir à l'équipement initiateur E_{Init}, en sus du code PIN, d'autres données utiles pouvant être prises en compte pour augmenter le niveau de sécurisation de la méthode proposée. En fonction des modes de réalisation, ces données utiles peuvent être obligatoires pour pouvoir valider le processus d'appairage.

Parmi ces autres données utiles, on peut par exemple mentionner l'adresse (par exemple l'adresse Bluetooth) du dispositif accepteur E_{Acc}. En fonction des modes de réalisation de l'invention, la fourniture de ces données utiles peut être mise en oeuvre différemment.

Dans un premier mode de réalisation, la fourniture des données utiles est séparée de la fourniture du code PIN. Cela signifie que, postérieurement à l'acquisition du symbole représentant le code PIN par l'équipement initiateur E_{Init}, une deuxième étape d'acquisition a lieu. Cette séparation en deux étapes permet de s'assurer du respect de la procédure et donc offre une sécurisation supplémentaire. Bien entendu, ces données utiles sont également présentées sous forme de symbole, qui peut être d'un type différent de celui du premier symbole. Ainsi, par exemple, le premier symbole peut être un code barre à une dimension tandis que le deuxième symbole peut se présenter sous la forme d'un code barre en deux dimensions.

Dans un deuxième mode de réalisation, la fourniture des données utiles est réalisée conjointement à la fourniture du code PIN sous forme de symbole. Cette fourniture conjointe peut être réalisée dans un seul et même symbole, par exemple un code barre en une ou deux dimensions ou alors en utilisant deux types de symboles différents (le premier symbole peut être un code barre à une dimension tandis que le deuxième symbole peut se présenter sous la forme d'un code barre en deux dimensions). La différence entre ce deuxième mode de réalisation et le premier mode de réalisation étant réalisée au moment de l'acquisition des symboles. Dans le cas où les données utiles sont présentées conjointement au code PIN, mais dans un symbole distinct du symbole du code PIN, on profite de la capacité des nouveaux scanners de scanner plusieurs codes-barres simultanément.

### 5.2. Description d'un mode de réalisation particulier

On décrit, dans ce mode de réalisation, la mise en oeuvre de l'invention pour l'appairage de deux dispositifs par l'intermédiaire de la technologie Bluetooth : il s'agit de réaliser un appairage d'un PDA et d'un terminal de paiement. Dans ce mode de réalisation, le PDA est l'équipement initiateur et le terminal de paiement est l'équipement accepteur.

Par rapport aux difficultés et aux problèmes préalablement exposés, l'appairage d'un terminal de paiement présente encore d'autres difficultés, parmi lesquelles l'obligation d'assurer un niveau de confidentialité absolu des données qui sont transmises au terminal.

En effet, une des fonctions qui sous-tend l'appairage d'un terminal de paiement avec un PDA est la fonction de paiement. Cette fonction est brièvement décrite en relation avec la figure 2. Une fois qu'ils ont été appariés (méthode objet de l'invention), c'est-à-dire postérieurement à l'étape 30 de la figure 1, le terminal de paiement et la PDA vont échanger des données chiffrées, par exemple selon le processus suivant :

Un client C réalise des achats dans une boutique à l'aide d'un PDA. Il peut soit utiliser seul le PDA pour ce faire, soit c'est le vendeur qui détient le PDA. Le PDA est utilisé pour scanner 40 les articles achetés par le client. Pour ce faire, le PDA met en oeuvre une application dite « métier » qui est exécutée sur le PDA. Cette phase de « scan » doit être comprise par son sens le plus large. Il peut s'agir d'un scan de code barre, comme d'un scan à partir d'un capteur optique de caméra ou d'une sélection sur une liste de produits présentée sur l'écran du PDA. Cette phase de « scan » est répétée 40-1 autant de fois que le client souhaite acheter de produits ou de services.

Lorsque le client a terminé ses achats, l'application « métier » du PDA requiert le paiement des achats du client C auprès du terminal de paiement TP. Cette requête *Rq* est transmise 50 par le PDA au terminal de paiement TP par l'intermédiaire de la liaison Bluetooth qui a été préalablement configurée par la méthode objet de l'invention. Cette requête chiffrée *Rq* comprend notamment le montant de la transaction (parmi d'autres paramètres). Ce montant est récupéré par le terminal de paiement TP qui l'utilise pour initier une transaction. Généralement, cette transaction est effectuée avec une carte de paiement CP détenue par l'utilisateur. Lors de l'initialisation de la transaction 60, le terminal de paiement TP prend la main : cela signifie que l'application métier qui est lancée sur le PDA est placée en mode « attente ». Le terminal de paiement TP est seul maitre du déroulement de la transaction de paiement. Le client C effectue ainsi le paiement par l'intermédiaire du terminal de paiement TP. Lorsque le paiement est validé par le terminal de paiement TP (ou que la transaction a échouée), le terminal de paiement TP transmet 70 au PDA le résultat RES de la transaction (soit une confirmation de paiement, soit une notification d'échec de la transaction), et l'application métier installée sur le PDA reprend la main pour finaliser l'achat. Cette finalisation peut consister, en fonction de l'application métier, à créditer des points de fidélité sur un compte de client à vérifier l'état de stocks, etc.

De la description qui vient d'être faite, on comprend aisément que les menaces qui pèsent sur les échanges de données entre le PDA et le terminal doivent être maîtrisées au mieux. Il est ainsi indispensable de garantir un niveau de sécurité élevé du processus d'appairage entre le PDA et le terminal de paiement. On comprend en effet que si dès le départ un attaquant arrive à se procurer le code PIN transmis du terminal de paiement vers le PDA, la sécurité ultérieure des échanges entre ces deux appareils est fortement compromise.

Dans ce mode de réalisation, les inventeurs ont eu l'idée ingénieuse d'utiliser les fonctionnalités qui sont intégrées tant dans le terminal de paiement que dans le PDA. Plus particulièrement, dans ce mode de réalisation, le terminal de paiement dispose d'une imprimante et le PDA d'un scanner optique de code barre. Ainsi plutôt que de requérir la saisie d'un code PIN par le commerçant, les inventeurs ont proposé, dans ce mode de réalisation, de générer aléatoirement un code PIN au niveau du terminal de paiement, puis d'imprimer le symbole représentant ce code PIN sous la forme d'un code barre grâce à l'imprimante du terminal de paiement. Une fois imprimé, ce symbole sous forme de code barre est ensuite scanné par le PDA, à l'aide de l'application de scan adéquate et interprété par le PDA. Le résultat de cette interprétation (qui est le code PIN généré par le terminal de paiement) est ensuite fourni au module Bluetooth du PDA afin qu'il puisse achever la procédure d'appairage.

Dans ce mode de réalisation, également, un deuxième symbole est imprimé sous la forme d'un code barre. Il correspond à l'adresse Bluetooth du terminal de paiement. Ce deuxième code barre est également scanné par le PDA dans une deuxième phase et l'adresse Bluetooth du terminal de paiement est obtenue. Ceci permet d'authentifier de manière unique le terminal auquel le PDA doit s'appairer.

Ainsi, grâce à cette méthode de l'invention, on résout les deux problèmes préalablement cités à savoir d'une part le problème liés aux erreurs de saisie de chaines de caractère de grande longueur et le problème lié à la nécessaire confidentialité qui doit entourer le code PIN saisi.

L'invention a été décrite dans un mode de réalisation particulier. Il est bien entendu que l'invention ne se limite nullement à ce mode de réalisation. L'invention porte également sur les équipements qui sont employés pour permettre l'appairage tel qu'il a été préalablement décrit. Plus particulièrement, l'invention se rapporte à un équipement accepteur. L'équipement accepteur comprend, selon l'invention : ,des moyens de génération d'un code d'appairage en réponse à cette décision d'appairage, des moyens de restitution, sous la forme d'un symbole, du code d'appairage. Ces moyens de restitution peuvent, comme cela a été indiqué, consister en une imprimante, un écran ou un moyen de restitution sonore.

L'ensemble de ces moyens sont pilotés par un programme d'ordinateur spécifiquement adapté, en fonction d'un protocole d'appairage initial, pour générer un code d'appairage, le transformer en un symbole et restituer ce symbole. Le programme d'ordinateur comprend en outre une phase de suspension de l'appairage tant que la procédure d'appairage n'a pas été complétée au niveau de l'équipement initiateur.

L'invention se rapporte également à un équipement initiateur. L'équipement initiateur comprend, selon l'invention :des moyens d'obtention de symbole d'un code d'appairage en réponse à cette décision d'appairage, des moyens de décodage du symbole acquis délivrant un code d'appairage ou d'autres données utiles en fonction du symbole et de son type. Ces moyens d'obtention peuvent, comme cela a été indiqué, consister en un capteur optique, une caméra, un micro.

L'ensemble de ces moyens sont pilotés par un programme d'ordinateur spécifiquement adapté, en fonction d'un protocole d'appairage initial, pour obtenir un ou plusieurs symboles, le décoder en un code d'appairage et mettre en oeuvre l'appairage subséquent. Le programme d'ordinateur comprend en outre une phase de suspension de l'appairage tant que la procédure d'appairage n'a pas été complétée au niveau de l'équipement accepteur.

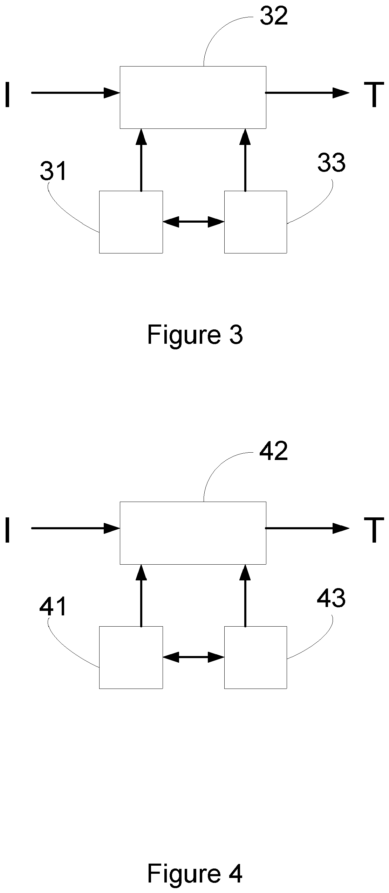

On présente, en relation avec la figure 3, un mode de réalisation d'un équipement accepteur selon l'invention.

Un tel équipement accepteur comprend une mémoire 31 constituée d'une mémoire tampon, une unité de traitement 32, équipée par exemple d'un microprocesseur P, et pilotée par le programme d'ordinateur 33, mettant en oeuvre le procédé de modification selon l'invention.

À l'initialisation, les instructions de code du programme d'ordinateur 33 sont par exemple chargées dans une mémoire RAM avant d'être exécutées par le processeur de l'unité de traitement 32. L'unité de traitement 32 reçoit en entrée au moins une information I, telle qu'une décision d'appairage. Le microprocesseur de l'unité de traitement 32 met en oeuvre les étapes du procédé d'appairage décrit précédemment, selon les instructions du programme d'ordinateur 33, pour délivrer une information traitée T, telle que le ou les symboles nécessaires à l'appairage de l'équipement. Pour cela, l'équipement comprend, outre la mémoire tampon 31, les moyens préalablement décrits. Ces moyens sont pilotés par le microprocesseur de l'unité de traitement 32.

On présente, en relation avec la figure 4, un mode de réalisation d'un équipement initiateur selon l'invention.

Un tel dispositif comprend une mémoire 41 constituée d'une mémoire tampon, une unité de traitement 42, équipée par exemple d'un microprocesseur P, et pilotée par le programme d'ordinateur 43, mettant en oeuvre le procédé d'appairage selon l'invention.

À l'initialisation, les instructions de code du programme d'ordinateur 43 sont par exemple chargées dans une mémoire RAM avant d'être exécutées par le processeur de l'unité de traitement 42. L'unité de traitement 42 reçoit en entrée au moins une information I, telle qu'un symbole en provenance d'un équipement accepteur. Le microprocesseur de l'unité de traitement 42 met en oeuvre les étapes du procédé de modification décrit précédemment, selon les instructions du programme d'ordinateur 43, pour délivrer une information traitée T, telle que le code d'appairage. Pour cela, le dispositif comprend, outre la mémoire tampon 41, les moyens préalablement décrits. Ces moyens sont pilotés par le microprocesseur de l'unité de traitement 42.

Comme cela a été parfaitement compris, le procédé d'appairage tel qu'il a été précédemment décrit comprend en fait un premier sous procédé d'appairage qui est mis en oeuvre sur le terminal initiateur et un deuxième sous procédé d'appairage qui est mis en oeuvre sur le terminal accepteur.

## Revendications

1. Méthode d'appairage d'un premier équipement, dit équipement initiateur désirant transmettre et recevoir des données avec un deuxième équipement, dit équipement accepteur, ladite méthode comprenant :
- une étape de génération asynchrone d'un code d'appairage, comprenant un code PIN aléatoire ;
- une étape de restitution, sous la forme d'une image tatouée dans laquelle un premier symbole est caché, dudit code d'appairage par ledit équipement accepteur, ledit premier symbole comprenant ledit code d'appairage ;
- une étape d'obtention, par ledit équipement accepteur, d'au moins une donnée utile à la transmission et à la réception avec ledit équipement initiateur ;
- une étape de restitution, sous la forme d'un deuxième symbole, de ladite au moins une donnée utile.

2. Méthode d'appairage d'un premier équipement, dit équipement initiateur désirant transmettre et recevoir des données avec un deuxième équipement, dit équipement accepteur, ladite méthode comprenant :
- une étape d'acquisition d'une image tatouée dans laquelle un premier symbole est caché, par ledit équipement initiateur;
- une étape d'obtention dudit premier symbole ;
- une étape de décodage dudit premier symbole acquis délivrant un code d'appairage asynchrone comprenant un code PIN aléatoire ;
- une étape d'acquisition d'un deuxième symbole par ledit équipement initiateur ;
- une étape de décodage dudit deuxième symbole délivrant des données utiles à la transmission et à la réception avec ledit équipement initiateur.

3. Méthode d'appairage selon l'une des revendications 1 et 2, dans laquelle ledit deuxième symbole appartient à un type de symbole et ledit type de symbole appartient au groupe comprenant :
- un code barre à une dimension ;
- un code barre à deux dimensions ;
- une image tatouée ;
- une séquence sonore modulée.

4. Méthode d'appairage selon la revendication 2, dans laquelle ledit équipement initiateur est un PDA.

5. Méthode d'appairage selon la revendication 1, dans laquelle ledit équipement accepteur est un terminal de paiement.

6. Méthode selon la revendication 1, dans laquelle ladite étape de restitution dudit code d'appairage sous la forme d'une image tatouée comprend une étape d'impression de ladite image tatouée sur une imprimante dudit équipement accepteur.

7. Méthode selon la revendication 2, dans laquelle ladite étape d'acquisition de ladite image tatouée par ledit équipement initiateur comprend une étape d'acquisition d'une image représentative de ladite image tatouée.

8. Équipement initiateur désirant transmettre et recevoir des données avec un équipement accepteur, comprenant :
- des moyens d'acquisition d'une image tatouée dans laquelle un premier symbole est caché, ledit premier symbole étant représentatif d'un code d'appairage asynchrone comprenant un code PIN aléatoire, permettant l'appairage dudit équipement accepteur et dudit équipement initiateur, ladite image tatouée étant restitué par un équipement accepteur ;
- des moyens d'obtention dudit premier symbole ;
- des moyens de décodage dudit premier symbole acquis délivrant ledit code d'appairage ;
- des moyens d'acquisition d'un deuxième symbole représentatif de données utiles à la transmission et à la réception avec ledit équipement accepteur ;
- des moyens de décodage dudit deuxième symbole délivrant lesdites données utiles.

9. Équipement accepteur désirant transmettre et recevoir des données avec un équipement initiateur, comprenant :
- des moyens de génération d'un code d'appairage asynchrone comprenant un code PIN aléatoire permettant l'appairage dudit équipement accepteur et dudit équipement initiateur ;
- des moyens de génération d'une image tatouée dans laquelle un premier symbole est caché, ledit symbole comprenant ledit code d'appairage ;
- des moyens de restitution, de ladite image tatouée;
- des moyens d'obtention d'au moins une donnée utile à la transmission et à la réception avec ledit équipement initiateur ;
- des moyens de restitution, sous la forme d'un deuxième symbole, de ladite au moins une donnée utile.

10. Méthode d'appairage selon la revendication 5, dans laquelle ladite image tatouée est un logo tatoué d'une entité qui utilise ledit terminal de paiement.

## Patentansprüche

1. Verfahren zur Paarung einer ersten Einrichtung, die als Initiatoreinrichtung bezeichnet wird und wünscht, mit einer zweiten Einrichtung, die als Akzeptoreinrichtung bezeichnet wird, Daten zu senden und zu empfangen, wobei das Verfahren umfasst:
- einen Schritt des asynchronen Generierens eines Paarungscodes, der einen Zufalls-PIN-Code umfasst;
- einen Schritt des Wiederherstellens, in der Form eines mit einem Wasserzeichen versehenen Bilds, in dem ein erstes Symbol verborgen ist, des Paarungscodes durch die Akzeptoreinrichtung, wobei das erste Symbol den Paarungscode umfasst;
- einen Schritt des Erhaltens, durch die Akzeptoreinrichtung, mindestens eines Datenwerts, der für das Senden und für den Empfang mit der Initiatoreinrichtung nützlich ist;
- einen Schritt des Wiederherstellens, in der Form eines zweiten Symbols, des mindestens einen nützlichen Datenwerts.

2. Verfahren zur Paarung einer ersten Einrichtung, die als Initiatoreinrichtung bezeichnet wird und wünscht, mit einer zweiten Einrichtung, die als Akzeptoreinrichtung bezeichnet wird, Daten zu senden und zu empfangen, wobei das Verfahren umfasst:
- einen Schritt des Erfassens eines mit einem Wasserzeichen versehenen Bilds, in dem ein erstes Symbol verborgen ist, durch die Initiatoreinrichtung;
- einen Schritt des Erhaltens des ersten Symbols;
- einen Schritt des Decodierens des erfassten ersten Symbols, wobei ein asynchroner Paarungscode geliefert wird, der einen Zufalls-PIN-Code umfasst;
- einen Schritt des Erfassens eines zweiten Symbols durch die Initiatoreinrichtung;
- einen Schritt des Decodierens des zweiten Symbols, wobei Daten geliefert werden, die für das Senden und für den Empfang mit der Initiatoreinrichtung nützlich sind.

3. Paarungsverfahren nach einem der Ansprüche 1 und 2, wobei das zweite Symbol zu einem Symboltyp gehört und der Symboltyp zu einer Gruppe gehört, umfassend:
- einen eindimensionalen Strichcode;
- einen zweidimensionalen Strichcode;
- ein mit einem Wasserzeichen versehenes Bild;
- eine modulierte Tonsequenz.

4. Paarungsverfahren nach Anspruch 2,
wobei die Initiatoreinrichtung ein PDA ist.

5. Paarungsverfahren nach Anspruch 1,
wobei die Akzeptoreinrichtung ein Zahlungsterminal ist.

6. Paarungsverfahren nach Anspruch 1,
wobei der Schritt des Wiederherstellens des Paarungscodes in der Form eines mit einem Wasserzeichen versehen Bilds einen Schritt des Druckens des mit einem Wasserzeichen versehenen Bilds auf einem Drucker der Akzeptoreinrichtung umfasst.

7. Paarungsverfahren nach Anspruch 2,
wobei der Schritt des Erfassens des mit einem Wasserzeichen versehenen Bilds durch die Initiatoreinrichtung einen Schritt des Erfassens eines Bilds umfasst, das für das mit einem Wasserzeichen versehene Bild repräsentativ ist.

8. Initiatoreinrichtung, welche wünscht, Daten mit einer Akzeptoreinrichtung zu senden und zu empfangen, umfassend:
- Mittel zum Erfassen eines mit einem Wasserzeichen versehenen Bilds, in dem ein erstes Symbol verborgen ist, wobei das erste Symbol für einen asynchronen Paarungscode repräsentativ ist, der einen Zufalls-PIN-Code umfasst, wobei die Paarung der Akzeptoreinrichtung und der Initiatoreinrichtung gestattet wird, wobei das mit einem Wasserzeichen versehene Bild durch eine Akzeptoreinrichtung wiederhergestellt wird;
- Mittel zum Erhalten des ersten Symbols;
- Mittel zum Decodieren des erfassten ersten Symbols, wobei der Paarungscode geliefert wird;
- Mittel zum Erfassen eines zweiten Symbols, das für Daten repräsentativ ist, die für das Senden und für den Empfang mit der Akzeptoreinrichtung nützlich sind;
- Mittel zum Decodieren des zweiten Symbols, wobei die nützlichen Daten geliefert werden.

9. Akzeptoreinrichtung, welche wünscht, Daten mit einer Initiatoreinrichtung zu senden und zu empfangen, umfassend:
- Mittel zum Generieren eines asynchronen Paarungscodes, der einen Zufalls-PIN-Code umfasst, wobei die Paarung der Akzeptoreinrichtung und der Initiatoreinrichtung gestattet wird;
- Mittel zum Generieren eines mit einem Wasserzeichen versehenen Bilds, in dem ein erstes Symbol verborgen ist, wobei das Symbol den Paarungscode umfasst;
- Mittel zum Wiederherstellen des mit einem Wasserzeichen versehenen Bilds;
- Mittel zum Erhalten mindestens eines Datenwerts, der für das Senden und für den Empfang mit der Initiatoreinrichtung nützlich ist;
- Mittel zum Wiederherstellen, in der Form eines zweiten Symbols, des mindestens einen nützlichen Datenwerts.

10. Paarungsverfahren nach Anspruch 5,
wobei das mit einem Wasserzeichen versehene Bild ein mit einem Wasserzeichen versehenes Logo einer Einheit ist, die das Zahlungsterminal verwendet.

## Claims

1. Method for pairing a first apparatus called an initiating apparatus, with a second apparatus called an accepting apparatus, said initiating apparatus seeking to transmit and receive data to and from said accepting apparatus, said method comprising:
- a step for generating an asynchronous pairing code, comprising a random PIN code;
- a step for the rendering, in the form of a watermarked image in which a first symbol is hidden, of said pairing code by said accepting apparatus, said first symbol comprising said pairing code;
- a step for obtaining, by said accepting apparatus, of at least one piece of payload data for the transmission and to the reception with said initiating apparatus;
- a step for restituting, in the form of a second symbol, of said at least one piece of payload data.

2. Method for pairing a first apparatus called an initiating apparatus, with a second apparatus called an accepting apparatus, said initiating apparatus seeking to transmit and receive data to and from said accepting apparatus, said method comprising:
- a step of acquiring of a watermarked image in which a first symbol is hidden, by said initiating apparatus;
- a step of obtaining of said first symbol;
- a step of decoding of said first acquired symbol delivering an asynchronous pairing code comprising a random PIN code;
- a step of acquiring of a second symbol by said initiating apparatus;
- a step of decoding of said second symbol delivering payload data for the transmission and the reception with said initiating apparatus.

3. Method for pairing according to one of claims 1 or 2, in which said second symbol belong to a type of symbol and said type of symbol belongs to the group comprising:
- a one-dimension barcode;
- a two-dimensions barcode;
- a watermarked image;
- a modulated sound sequence.

4. Method for pairing according to claim 2, in which said initiating apparatus is a PDA.

5. Method for pairing according to claim 1, in which said accepting apparatus is a payment terminal.

6. Method according to claim 1, in which said step for rendering said pairing code in the form of a watermarked image comprises a step for printing out said watermarked image on a printer of said accepting apparatus.

7. Method according to claim 2, in which said step for acquiring said watermarked image by means of said initiating apparatus comprises a step for acquiring an image representing said watermarked image.

8. Initiating apparatus seeking to transmit and receive data to and from an accepting apparatus, comprising:
- means for acquiring a watermarked image in which a first symbol is hidden representing an asynchronous pairing code comprising a random PIN code, enabling the pairing of said accepting apparatus and said initiating apparatus, said watermarked image being rendered by an accepting apparatus;
- means for obtaining said first symbol;
- means for decoding said first acquired symbol delivering said pairing code;
- a step of acquiring of a second symbol representing payload data for the transmission and the reception with said initiating apparatus;
- a step of decoding of said second symbol delivering said payload data.

9. Accepting apparatus seeking to transmit and receive data to and from an initiating apparatus, comprising:
- means for generating an asynchronous pairing code comprising a random PIN code, enabling the pairing of said accepting apparatus and said initiating apparatus;
- means for generating a watermarked image in which a first symbol is hidden, said first symbol comprising said pairing code;
- means for rendering said pairing code in the form of said watermarked image.
- means for obtaining, by said accepting apparatus, of at least one piece of payload data to the transmission and to the reception with said initiating apparatus;
- means for restituting, in the form of a second symbol, of said at least one piece of payload data.

10. Pairing method according to claim 5 in which said watermarked image is a watermarked logo of an entity which uses said payment terminal.
